# EUROPEAN PATENT APPLICATION

(11) **EP 4 790 351 A1**
(43) Date of publication of application: **12.08.2026**
(21) Application number: 26154860.6
(22) Date of filing: 28.01.2026
(51) Int. Cl.: F28F 7/02, B64D 13/00, B64G 1/50

(54) **HEAT EXCHANGER FOR GAS TURBINE ENGINES**

(30) Priority: 11.02.2025 IT 202500002580; 31.07.2025 US 202519286517
(71) Applicant: GE Avio S.r.l., 10040 Rivalta di Torino (TO) (IT)
(72) Inventor: VULPIO, Alessandro, 10040 Rivalta di Torino (IT); PERADOTTO, Edoardo Maria, 10040 Rivalta di Torino (IT); D'ANNA, Marco, 10040 Rivalta di Torino (IT)
(74) Representative: Openshaw & Co.

(57) **Abstract**

A heat exchanger (200) for a gas turbine engine (10) includes a core (205) extending in an axial direction between a first end (201) and a second end (202) opposite the second end (202). The core (205) defines a first fluid domain (300) and a second fluid domain (305) fluidly isolated from the first fluid domain (300). The second fluid domain (305) defines one or more helical fluid passageways (315), and the one or more helical fluid passageways (315) define a pitch (P). The core (205) also defines a diameter (D) extending perpendicular to the axial direction. The heat exchanger (200) also includes a fluid inlet manifold (215) fluidly coupled to the first end (201) of the core (205) and in fluid communication with each of the one or more helical fluid passageways (315) and a fluid outlet manifold (425) fluidly coupled to the second end (202) of the core (205) and in fluid communication with the second fluid domain (305).

## Description

### FIELD

The present disclosure relates to a heat exchanger for gas turbine engines.

### BACKGROUND

A gas turbine engine generally includes a turbomachine and a rotor assembly. Gas turbine engines, such as turbofan engines, are used for aircraft propulsion. In the case of a turbofan engine, the rotor assembly are configured as a fan assembly.

Gas turbine engines typically incorporate the use of one or more thermal management systems, including one or more heat exchangers, to control thermal energy of various fluids passing through various components of the gas turbine engines. However, heat exchangers that improve cooling of thermal fluid are desirable.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a gas turbine engine in accordance with an exemplary aspect of the present disclosure.
FIG. 2 is a perspective view of a heat exchanger in accordance with an exemplary aspect of the present disclosure.
FIG. 3A is an interior view of a core of the heat exchanger of FIG. 2 illustrating a first fluid domain and a second fluid domain in accordance with an exemplary aspect of the present disclosure.
FIG. 3B is an interior view of the core of the heat exchanger of FIG. 2 illustrating the second fluid domain in accordance with an exemplary aspect of the present disclosure.
FIG. 4A is a cross-sectional view of the heat exchanger of FIG. 2 illustrating the first fluid domain in accordance with an exemplary aspect of the present disclosure.
FIG. 4B is a cross-sectional view of the heat exchanger of FIG. 2 illustrating the second fluid domain in accordance with an exemplary aspect of the present disclosure.
FIG. 5 is a graphical representation of heat exchanger characteristics for different example heat exchangers according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section refers to a section including one or more of a deflagrative combustion assembly, a rotating detonation combustion assembly, a pulse detonation combustion assembly, or other appropriate heat addition assembly. In certain example embodiments, the combustion section includes an annular combustor, a can combustor, a cannular combustor, a trapped vortex combustor (TVC), or other appropriate combustion system, or combinations thereof.

The terms "low" and "high," or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" are used interchangeably to distinguish one component from another and are not intended to signify location or importance of the individual components.

The term "adjacent" refer to being closer to one end, side, or component than an opposite end, side, or component. For example, when used in conjunction with first and second ends or the like, the phrase "adjacent the first end," refers to a location closer to the first end than the second end.

Generally, a gas turbine engine includes a fan and a turbomachine, with the turbomachine rotating the fan to generate thrust. The turbomachine includes a compressor section, a combustion section, a turbine section, and an exhaust section that collectively define a core gas flowpath therethrough. The gas turbine engine also includes thermal management systems, such as heat exchangers, for dissipating heat loads. Improvements in gas turbine engines for aircraft are directed to improving uniform filling of heat exchangers for enhancing heat transfer.

The inventors of the present disclosure sought out a means to efficiently cool thermal fluid flowing through heat exchangers. The inventors developed a heat exchanger having a core defining at least one helical fluid pathway. The inventors discovered, unexpectedly, in the course of designing a gas turbine engine having such a heat exchanger, that the costs associated with inclusion of the heat exchanger are overcome by thermal management benefits in at least certain designs, contrary to previous thinking and expectations. In particular, the inventors discovered during the course of designing several heat exchangers for gas turbine engines (including the configurations illustrated and described in detail herein), a significant relationship exists among a diameter of a core of the heat exchanger, a pitch of the helical fluid pathway, and an axial height of an inlet opening of the core. Including the heat exchanger in accordance with one or more of the exemplary aspects described herein results in a net benefit to the overall engine design.

With a goal of arriving at an improved gas turbine engine including a heat exchanger capable of providing uniform filling and enhanced heat transfer, the inventors proceeded in the manner of designing heat exchangers for gas turbine engines with various diameters of the core, pitches of the helical fluid pathway, and axial heights of the inlet opening of the core; checking an operability and heat transfer characteristics of the designed heat exchangers for gas turbine engines; redesigning the heat exchangers for gas turbine engines to vary the noted characteristics based on the impact on other aspects of the heat exchanger and gas turbine engines; and rechecking the operability and heat transfer characteristics of the redesigned heat exchangers for gas turbine engines during the design of several different types of heat exchangers, including the heat exchanger for gas turbine engines described herein, which are described below in greater detail.

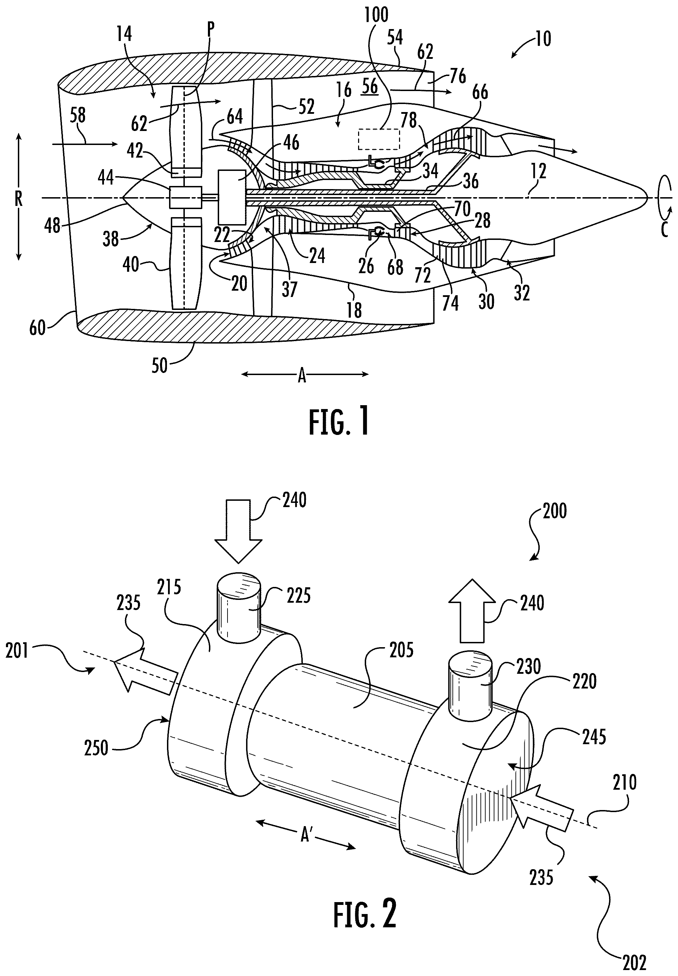

FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft 34 (which is, additionally or alternatively, a spool) drivingly connects the HP turbine 28 to the HP compressor 24. A low pressure (LP) shaft 36 (which is, additionally or alternatively, a spool) drivingly connects the LP turbine 30 to the LP compressor 22. The compressor section, combustion section 26, turbine section, and jet exhaust nozzle section 32 together define a core gas flowpath 37.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gear box 46, and the fan blades 40, disk 42, and pitch change mechanism 44 are rotatable together about the longitudinal centerline 12 by LP shaft 36 across the power gear box 46. The power gear box 46 includes a plurality of gears for adjusting a rotational speed of the fan 38 relative to a rotational speed of the LP shaft 36, such that the fan 38 rotates at a more efficient fan speed.

Referring still to the exemplary embodiment of FIG. 1, the disk 42 is covered by rotatable front hub 48 of the fan section 14 (sometimes also referred to as a "spinner"). The front hub 48 aerodynamically contoured to promote an airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 so as to define a bypass airflow passage 56 therebetween.

During operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56 and a second portion of air 64 as indicated by arrow 64 is directed or routed into the core gas flowpath 37, or more specifically into the LP compressor 22. The ratio between the first portion of air 62 and the second portion of air 64 is commonly known as a bypass ratio. A pressure of the second portion of air 64 is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. Collectively, the HP turbine 28, the LP turbine 30, and the jet exhaust nozzle section 32 at least partially define a hot gas path 78 for routing the combustion gases 66 through the turbomachine 16.

Referring still to FIG. 1, in at least one example embodiment, such as the example embodiment depicted, the gas turbine engine 10 includes a thermal management system 100. The thermal management system 100 is configured to provide a lubricant to, e.g., various bearings and gear meshes in the compressor section (including the LP compressor 22 and HP compressor 24), the turbine section (including the HP turbine 28 and the LP turbine 30), the HP shaft 34, the LP shaft 36, and the power gear box 46. The lubricant provided by the thermal management system 100 increases the useful life of such components and removes a certain amount of heat from such components. Moreover, fuel is used as a heat sink to absorb heat from the lubricant and cool the lubricant. Additionally, or alternatively, thermal fluids, such as water glycol and super critical carbon dioxide (CO₂), is used as the heat sink for cooling the lubricant.

FIG. 2 is a perspective view of a heat exchanger 200 in accordance with an exemplary aspect of the present disclosure. More particularly, the heat exchanger 200 is incorporated into the thermal management system 100 of the gas turbine engine 10 of FIG. 1.

The heat exchanger 200 includes a core 205 extending in an axial direction A' along an axial centerline 210 between a first end 201 and a second end 202 opposite the first end 201. As shown in FIG. 2, the core 205 defines a cylindrical shape. Additionally, the core 205 of the heat exchanger 200 is configured to receive a first fluid 235 and a second fluid 240. The first fluid 235 enters the core 205 through a first fluid inlet 245 defined by the second end 202 of the core 205 and exits the core 205 through a first fluid outlet 250 defined by the first end 201 of the core 205.

The heat exchanger 200 includes a fluid inlet manifold 215 fluidly coupled to the first end 201 of the core 205 and a fluid outlet manifold 220 fluidly coupled to the second end 202 of the core 205. The fluid inlet manifold 215 and the fluid outlet manifold 220 have a cylindrical shape and extend annularly about the core 205 such that the fluid inlet manifold 215 is a first annular manifold and the fluid outlet manifold 220 is a second annular manifold. For example, the fluid inlet manifold 215 surrounds or circumscribe the first end 201 of the core 205 and the fluid outlet manifold 220 surrounds or circumscribe the second end 202 of the core 205. Moreover, the heat exchanger 200 includes a second fluid inlet 225 in fluid communication with the fluid inlet manifold 215 and a second fluid outlet 230 in fluid communication with the fluid outlet manifold 220. The second fluid inlet 225 and the second fluid outlet 230 includes one or more conduits or tubing.

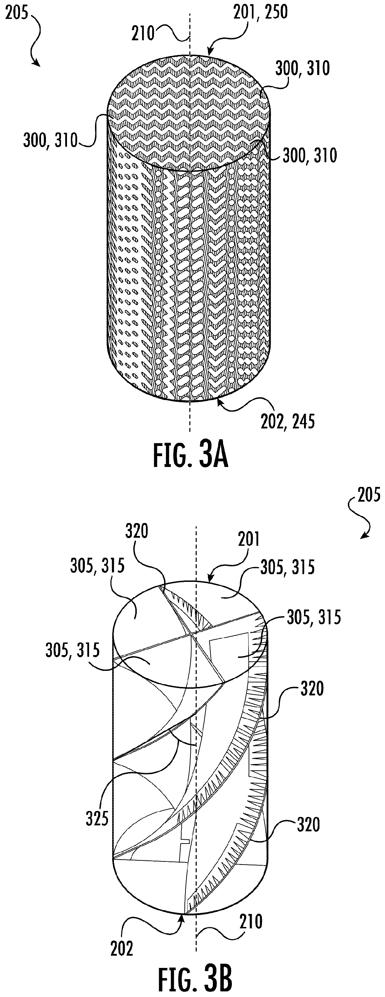

The second fluid 240 enters the fluid inlet manifold 215 through the second fluid inlet 225. The fluid inlet manifold 215 is in fluid communication with the core 205 and distributes the second fluid 240 to one or more fluid passageways within the core 205, as discussed herein with respect to FIGS. 3A-4B. The fluid outlet manifold is also in fluid communication with the core 205 such that the second fluid 240 flows from the fluid inlet manifold 215, through the core 205, and to the fluid outlet manifold 220 where the second fluid 240 exits the heat exchanger 200 through the second fluid outlet 230.

The first fluid 235 is configured to exchange heat with the second fluid 240. For example, the first fluid 235 is configured to absorb heat from the second fluid 240 within the core 205 such that the first fluid 235 exiting the core 205 through the first fluid outlet 250 is hotter than the first fluid 235 that enters the core 205 through the first fluid inlet 245, and the second fluid 240 that exits the heat exchanger 200 through the fluid outlet manifold 220 is cooler than the second fluid 240 entering through the fluid inlet manifold 215. Alternatively, the second fluid 240 is configured to absorb heat from the first fluid 235 within the core 205 such that the second fluid 240 exiting through the fluid outlet manifold 220 is hotter than the second fluid 240 entering through the fluid inlet manifold 215, and the first fluid 235 exiting the core 205 through the first fluid outlet 250 is cooler than the first fluid 235 entering the core 205 through the first fluid inlet 245. In at least one example embodiment, the first fluid 235 and the second fluid 240 are different. For example, the first fluid 235 includes fuel and the second fluid 240 includes oil or, alternatively, the first fluid 235 includes oil and the second fluid 240 includes fuel. In other example embodiments, the first fluid 235 and the second fluid 240 are the same.

FIG. 3A is an interior view of the core 205 of the heat exchanger 200 of FIG. 2 illustrating a first fluid domain 300 including a plurality of fluid pathways 310 in accordance with an exemplary aspect of the present disclosure. FIG. 3B is an interior view of the core 205 of the heat exchanger 200 of FIG. 2 illustrating a second fluid domain 305 in accordance with an exemplary aspect of the present disclosure.

The core 205 includes a lattice structure defining the first fluid domain 300 and the second fluid domain 305 fluidly isolated from the first fluid domain 300. The first fluid domain 300 includes a first fluid pathway and the second fluid domain 305 includes a second fluid pathway fluidly isolated from the first fluid pathway of the first fluid domain 300. More specifically, as shown in FIG. 3A, the first fluid domain 300 includes the plurality of fluid pathways 310 extending along the axial centerline 210 from the first fluid inlet 245 at the the second end 202 to the first fluid outlet 250 at the first end 201. Each of the plurality of fluid pathways 310 are configured to receive the first fluid 235 (FIG. 1).

As shown in FIG. 3B, the second fluid domain 305 includes one or more helical fluid passageways 315. Each of the one or more helical fluid passageways 315 are defined by and fluidly isolated by one or more boundary walls having a helical shape, such as one or more helical walls 320. The one or more helical fluid passageways 315 and the one or more helical walls 320 extend around the axial centerline 210 from the first end 201 to the second end 202. With reference to FIG. 3B, the second fluid domain 305 includes four of the one or more helical fluid passageways 315 defined by four of the one or more helical walls 320 when viewed from the first end 201. While FIG. 3B illustrates four of the one or more helical fluid passageways 315, it should be understood that the core 205 defines any number of helical fluid passageways. For example, the one or more helical fluid passageways 315 include one to twenty helical fluid passageways in some example embodiments. More specifically, the one or more helical fluid passageways 315 include four to eight helical fluid passageways.

Moreover, each of the one or more helical fluid passageways 315 define a helix angle 325. The helix angle 325 is defined between each of the one or more helical fluid passageways 315 and the axial centerline 210. For example, the helix angle 325 is defined between one or the one or more helical walls 320 and the axial centerline 210. The helix angle 325 is selected based a number of the one or more helical fluid passageways 315 and desired fluid dynamics. For example, the helix angle 325 is greater than zero (0) and less than $\frac{π}{3}$.

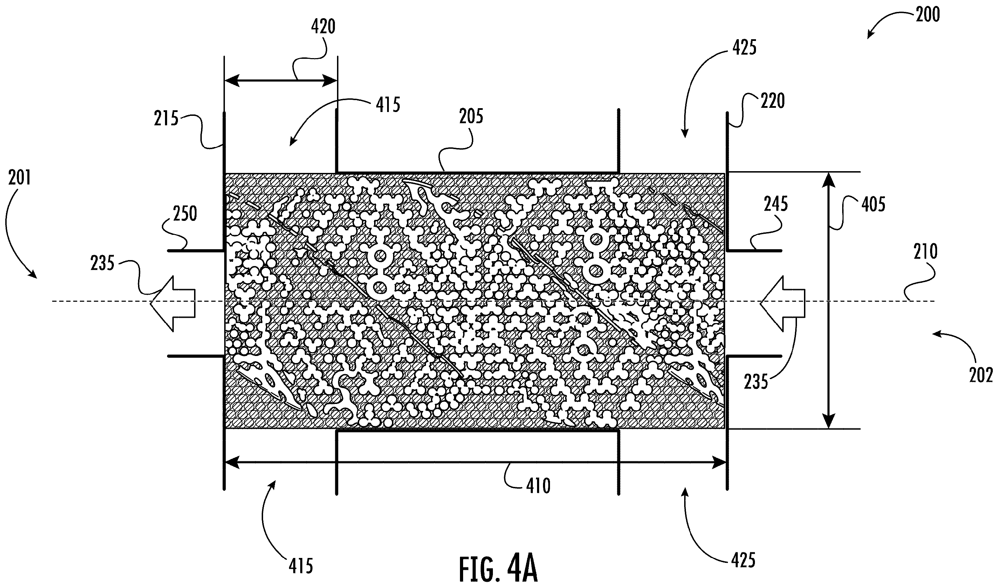

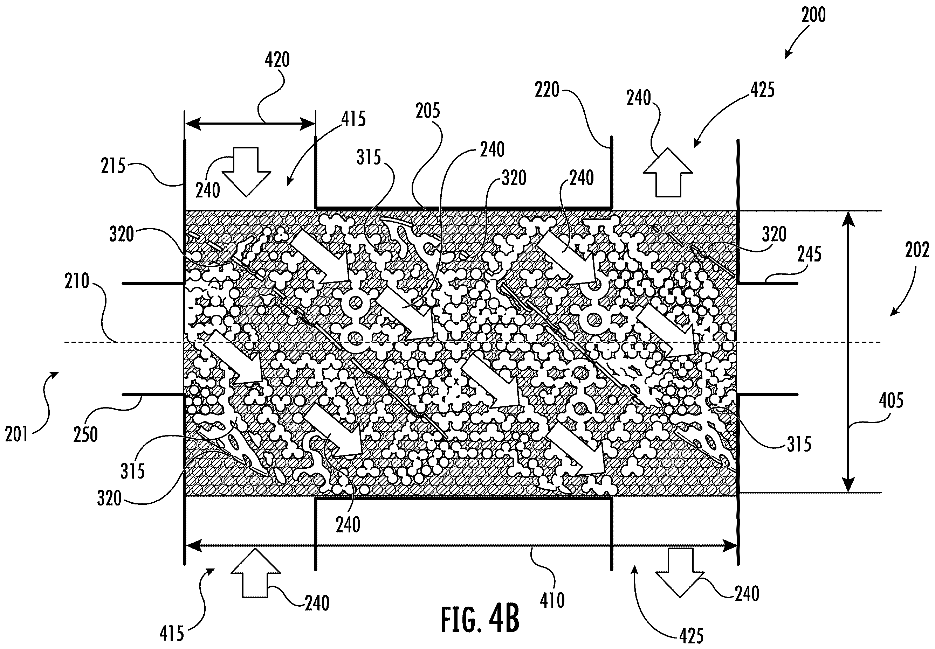

FIG. 4A is a cross-sectional view of the heat exchanger 200 of FIG. 2 illustrating the first fluid domain 300 in accordance with an exemplary aspect of the present disclosure. FIG. 4B is a cross-sectional view of the heat exchanger 200 of FIG. 2 illustrating the second fluid domain 305 in accordance with an exemplary aspect of the present disclosure. More particularly, FIG. 4A illustrates a flow of the first fluid 235 flowing through the core 205 along the axial centerline 210 from the second end 202 to the first end 201, and FIG. 4B illustrates the second fluid flowing through the core 205 along the one or more helical fluid passageways 315 about the axial centerline 210 from the first end 201 to the second end 202.

As shown in FIGS. 4A-4B, the core 205 of the heat exchanger 200 defines a diameter 405 extending perpendicular to the axial centerline 210. The diameter 405 is greater than or equal to 20 millimeters and less than or equal to 300 millimeters. More specifically, the diameter 405 is greater than or equal to 50 millimeters and less than or equal to 200 millimeters. The core 205 also defines a length 410 extending parallel to the axial centerline 210 between the first end 201 and the second end 202. The length 410 is greater than or equal to 50 millimeters (mm) and less than or equal to 1,500 mm. The diameter 405 of the core 205 is constant along the length 410 extending the from the first end 201 to the second end 202 of the core 205.

Moreover, core 205 defines an inlet opening 415 in fluid communication with the fluid inlet manifold 215 and, more specifically, in fluid communication with the one or more helical fluid passageways 315. The inlet opening 415 is an annular opening disposed in the core 205 adjacent the first end 201 and in fluid communication with the fluid inlet manifold 215. For example, the inlet opening 415 extends about a diameter of the core 205 adjacent the first end 201. The inlet opening 415 defines an axial height 420 extending parallel to the axial centerline 210. As shown in FIG. 4A, the axial height 420 is a length of the inlet opening 415 measured along the axial direction A' (FIG. 2). The axial height 420 is greater than or equal to 10 millimeters and less than or equal to 900 millimeters. More specifically, the axial height 420 is greater than or equal to 25 millimeters and less than or equal to 300 millimeters.

Additionally, the fluid outlet manifold 220 defines a fluid outlet opening 425 in fluid communication with the core 205 and, more specifically, in fluid communication with the one or more helical fluid passageways 315. The fluid outlet opening 425 is an annular opening disposed in the core 205 adjacent the second end 202 such that the fluid outlet opening 425 extends about a diameter of the core 205 adjacent the second end 202. Moreover, the fluid outlet opening 425 defines an axial height similar or analogous to the axial height 420 of the inlet opening 415. For example, the axial height of the fluid outlet opening 425 is a length of the fluid outlet opening 425 measured along the axial direction A' (FIG. 2).

As alluded to earlier, the inventors discovered, unexpectedly during the course of designing heat exchangers for gas turbine engines - i.e., designing heat exchangers for gas turbine engines having with various diameters of the core, pitches of the helical fluid pathway, and axial heights of the inlet opening of the core, and evaluating an overall engine and heat transfer performance - a significant relationship exists between a diameter of a core of the heat exchanger, a pitch of the helical fluid pathway, and an axial height of an inlet opening of the core. The relationship is an indicator of the ability of a heat exchanger for a gas turbine to uniformly fill the core of the heat exchanger with a first fluid for enhanced heat transfer to a second fluid. Equally distributing the first fluid and/or the second fluid within the heat exchanger enhances heat transfer between the first fluid and the second fluid.

In particular, the inventors discovered that for a heat exchanger defining a first fluid domain and a second fluid domain and defining one or more helical fluid passageways for either the first fluid domain or the second fluid domain, the one or more helical fluid passageways guide fluid flow to prevent maldistribution. Maldistribution of fluid flow is attributed to a difference in size of an inlet opening of a fluid inlet manifold relative to a length of the core of the heat exchanger. Accordingly, relating an axial height of the inlet opening of the fluid inlet manifold and a pitch of the one or more helical fluid passageways improves uniform filling of the core and heat transfer within the core to suit a particular need for a gas turbine engine.

The discovered relationship, *infra*, can therefore identify a heat exchanger for a gas turbine engine with one or more helical fluid passageways capable of achieving uniform filling and improved heat transfer, and suited for a particular mission requirement, one that takes into account efficiency, weight, thermal capacity needs, complexity, reliability, and other factors influencing the optimal choice for a heat exchanger for a gas turbine engine with one or more helical fluid passageways.

In addition to yielding an improved heat exchanger for a gas turbine engine with one or more helical fluid passageways, as explained in detail above, utilizing this relationship, the inventors found that the number of suitable or feasible heat exchanger designs for gas turbine engines capable of meeting the above design requirements could be greatly diminished, thereby facilitating a more rapid down selection of designs to consider as a heat exchanger for a gas turbine engine (with one or more helical fluid passageways) being developed. Such a benefit provides more insight to the requirements for a given heat exchanger for a gas turbine engine well before specific technologies, integration and system requirements are developed fully. Such a benefit avoids late-stage redesign.

The relationship providing for the improved gas turbine engine, discovered by the inventors, is a heat exchanger relationship, expressed as: $\frac{h}{D} = f \left(\frac{P}{D}\right)$

Generally, the heat exchanger relationship relates an axial height h of the inlet opening 415 of the fluid inlet manifold 215, a pitch P of the one or more helical fluid passageways 315, and a diameter D of the heat exchanger 200. The axial height h is the axial height 420 of the inlet opening 415 of the fluid inlet manifold 215 of the heat exchanger 200 discussed with respect to FIGS. 4A-4B. The axial height h is greater than or equal to 10 millimeters and less than or equal to 900 millimeters. More specifically, the axial height h is greater than or equal to 25 millimeters and less than or equal to 300 millimeters.

The diameter D is the diameter 405 of the core 205 of the heat exchanger 200 discussed with respect to FIGS. 4A-4B. The diameter 405 is greater than or equal to 20 millimeters and less than or equal to 300 millimeters. More specifically, the diameter 405 is greater than or equal to 50 millimeters and less than or equal to 200 millimeters. Moreover, the pitch P is a height of one turn of the one or more helical fluid passageways 315 measured parallel to the axial centerline 210. If a full turn of the one or more helical fluid passageways 315 is not present, the pitch P is determined by considering the value of the pitch if the one or more helical fluid passageways 315 were continued to a full turn. The pitch P is greater than or equal to 10 millimeters and less than or equal to 900 millimeters. More specifically, the pitch P is greater than or equal to 50 millimeters and less than or equal to 600 millimeters.

To achieve uniform filling of the core 205 of the heat exchanger 200, the axial height h is equated to a crossflow area of the one or more helical fluid passageways 315. The crossflow area of the one or more helical fluid passageways 315 is based on a helix angle α, which is the same as the helix angle 325 discussed with respect to FIG. 3B. Accordingly, the relationship between the axial height h to the crossflow area of the one or more helical fluid passageways 315 is expressed as follows: $h = \frac{P}{4 π} ⋅ cos α$

Moreover, the helix angle α is expressed as follows: $α = arctan \left(\frac{P}{πD}\right)$

Using the expressions in (2)-(3), a ratio of the axial height h over the diameter D is expressed as follows: $\frac{h}{D} = \frac{P}{D} ⋅ \frac{1}{4 π} ⋅ cos \left(arctan\left(\frac{P}{πD}\right)\right)$

The ratio of the axial height h over the diameter D (expressed as $\frac{h}{D}$) is greater than 0 and less than 3.1. More specifically, the ratio $\frac{h}{D}$ is greater than 0.5 and less than 1.5. Values below the provided range for the ratio $\frac{h}{D}$ would result in the axial height 420 being smaller than crossflow area of the one or more helical fluid passageways 315, which would create flow diffusion and not provide uniform filling of the heat exchanger 200.

Based on fluid dynamics, the helix angle α is greater than or equal to 0 and less than or equal to $\frac{π}{3}$. Accordingly, using the expression in (3) above, a ratio of the pitch P over the diameter D (expressed as $\frac{P}{D}$) is expressed as follows: $0 < \frac{P}{D} < 3.3$

More specifically, the ratio $\frac{P}{D}$ is greater 0 and less than 3.3. For example, the ratio $\frac{P}{D}$ is greater than 1 and less than 3. Uniform filling of the one or more helical fluid passageways 315 is not achieved for values outside the provided range for the helix angle α and the ratio of $\frac{P}{D}$. More specifically, fluids only partially fill the core 205 for values outside the provided range for the helix angle α and the ratio of $\frac{P}{D}$.

Moreover, the one or more helical fluid passageways 315 are effective until the axial height h is equal to the pitch P. For example, if the axial height h exceeds the pitch P, uniform filling does not occur because the flow diffuses. Accordingly, based on the diameter D, the following limit is obtained: $\frac{h}{D} < \frac{P}{D}$

Additionally, for a given diameter D, a reduction of the pitch P allows the axial height h to be reduced. Accordingly, the relationship in (4) is used to select the pitch P of the one or more helical fluid passageways 315 according to the diameter D to suit a particular need, such as a size of the heat exchanger 200 for a particular gas turbine engine.

Values for various heat exchanger characteristics for a gas turbine engine defined by expressions (1)-(6) are set forth below in TABLE 1:

| **TABLE 1** | | |
|---|---|---|
| **Symbol** | **Description** | **Ranges appropriate for using in Expressions (1) -(6)** |
| *h* | Axial height | 10 mm to 900 mm, such as 25 mm to 300 mm |
| *P* | Pitch | 10 mm to 900 mm, such as 50 mm to 600 mm |
| *D* | Diameter | 20 mm to 300 mm, such as 50 mm to 200 mm |
| $\frac{h}{D}$ | Ratio of axial height over diameter | 0 to 3.1, such as 0.5 to 1.5 |
| P *D* | Ratio of pitch over diameter | 0 to 3.3, such as 1 to 3 |

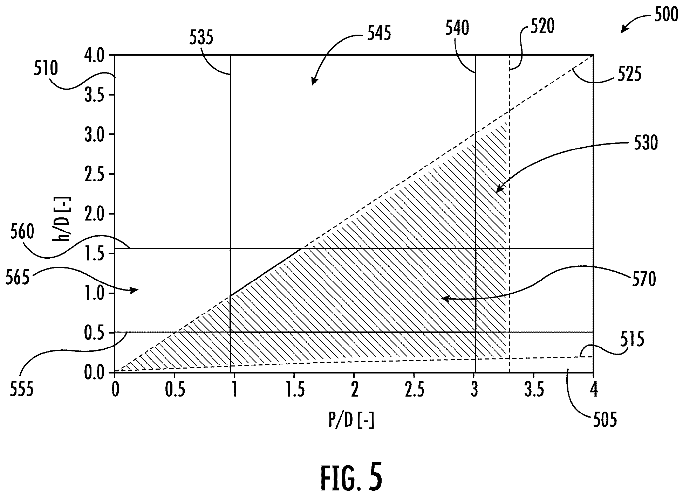

FIG. 5 provides a graph 500 depicting the ratio of the axial height h over the diameter D (expressed as $\frac{h}{D}$) as a function of the ratio of the pitch P over the diameter D (expressed as $\frac{P}{D}$)*.* For example, the graph 500 provides the ratio $\frac{P}{D}$ on the X-axis 505 and the ratio $\frac{h}{D}$ on the Y-axis 510. The graph 500 includes a first line 515 representing the relationship expressed in (4) above. The graph 500 includes a second line 520 representing the relationship expressed in (5) above. The graph 500 also includes a third line 525 representing the relationship expressed in (6) above. Moreover, the graph 500 provides a first range 530 between the first line 515, the second line 520, and the third line 525. In the first range 530, the ratio $\frac{P}{D}$ is greater than or equal to 0.5 and less than or equal to 3.3 and the ratio $\frac{h}{D}$ is greater than or equal to 0 and less than or equal to 3.1.

Additionally, the graph 500 includes a fourth line 535 and a fifth line 540 defining a second range 545 for the ratio $\frac{P}{D}$. As shown, the ratio $\frac{P}{D}$ is greater than or equal to 1 and less than or equal to 3. The graph 500 includes a sixth line 555 and a seventh line 560 defining a third range 565 for the ratio $\frac{h}{D}$. As shown, the ratio $\frac{h}{D}$ is greater than or equal to 0.5 and less than or equal to 1.5. Moreover, the graph 500 provides a fourth range 570 between the third line 525, the fourth line 535, the fifth line 540, the sixth line 555, and the seventh line 560. In the fourth range 570, the ratio $\frac{P}{D}$ is greater than or equal to 1 and less than or equal to 3, and the ratio $\frac{h}{D}$ is greater than or equal to 0.5 and less than or equal to 1.5.

Values outside the first range 530 and the fourth range 570 only partially fill the core 205 and create flow diffusion, which prevents uniform filling of the core 205. Accordingly, the present disclosure provides a heat exchanger for a gas turbine engine including a first fluid domain for receiving a first fluid and a second fluid domain fluidly isolated from the first fluid domain for receiving a second fluid. The first fluid domain or the second fluid domain includes a plurality of helical fluid passageways providing for uniform filling of the heat exchanger such that heat transfer between the first fluid of the first fluid domain and the second fluid of the second fluid domain is improved.

Further aspects are provided by the subject matter of the following clauses:

A heat exchanger for a gas turbine engine, the heat exchanger comprising: a core extending in an axial direction between a first end and a second end opposite the second end, the core defining a first fluid domain and a second fluid domain fluidly isolated from the first fluid domain, wherein the second fluid domain defines one or more helical fluid passageways, wherein the one or more helical fluid passageways define a pitch (P) measured in millimeters (mm), wherein the core defines a diameter (D) measured in mm extending perpendicular to the axial direction; a fluid inlet manifold fluidly coupled to the first end of the core and in fluid communication with each of the one or more helical fluid passageways of the second fluid domain, the fluid inlet manifold defining an inlet opening having an axial height (h) measured in mm extending in the axial direction; and a fluid outlet manifold fluidly coupled to the second end of the core and in fluid communication with the second fluid domain; wherein $\frac{h}{D} = \frac{P}{D} ⋅ \frac{1}{4 π} ⋅ cos \left(arctan\left(\frac{P}{πD}\right)\right)$; and wherein $\frac{h}{D}$ is less than $\frac{P}{D}$.

The heat exchanger of any preceding clause, wherein $\frac{P}{D}$ is greater than 0 and less than 3.3.

The heat exchanger of any preceding clause, wherein $\frac{P}{D}$ is greater than 1 and less than 3.

The heat exchanger of any preceding clause, wherein $\frac{h}{D}$ is greater than 0.5 and less than 3.1.

The heat exchanger of any preceding clause, wherein $\frac{h}{D}$ is greater than 0.5 and less than 1.5.

The heat exchanger of any preceding clause, wherein the axial height (h) is greater than or equal to 10 mm and less than or equal to 900 mm.

The heat exchanger of any preceding clause, wherein the axial height (h) is greater than or equal to 25 mm and less than or equal to 300 mm.

The heat exchanger of any preceding clause, wherein the diameter (D) is greater than or equal to 20 mm and less than or equal to 300 mm.

The heat exchanger of any preceding clause, wherein the diameter (D) is greater than or equal to 50 mm and less than or equal to 200 mm.

The heat exchanger of any preceding clause, wherein the pitch (P) is greater than or equal to 10 mm and less than or equal to 900 mm.

The heat exchanger of any preceding clause, wherein the pitch (P) is greater than or equal to 50 mm and less than or equal to 600 mm.

The heat exchanger of any preceding clause, wherein the one or more helical fluid passageways define a helix angle (α), wherein $h = \frac{P}{4 π} ⋅ cos α$; and wherein $α = arctan \left(\frac{P}{πD}\right)$.

The heat exchanger of any preceding clause, wherein the core comprises one or more helical walls fluidly isolating the first fluid domain and the second fluid domain.

The heat exchanger of any preceding clause, wherein each of the one or more helical walls has a helical shape defining the one or more helical fluid passageways.

The heat exchanger of any preceding clause, wherein the one or more helical fluid passageways comprises 4 to 8 helical fluid passageways.

The heat exchanger of any preceding clause, wherein the one or more helical fluid passageways comprises four helical fluid passageways.

The heat exchanger of any preceding clause, further comprising at least one fluid inlet in fluid communication with the fluid inlet manifold and at least one fluid outlet in fluid communication with the fluid outlet manifold.

The heat exchanger of any preceding clause, wherein the fluid inlet manifold is a first annular manifold surrounding the first end of the core and the fluid outlet manifold is a second annular manifold surrounding the second end of the core.

The heat exchanger of any preceding clause, wherein the second end of the core defines a first fluid inlet configured to receive a first fluid and the first end of the core defines a first fluid outlet, the first fluid inlet and the first fluid outlet in fluid communication with the first fluid domain.

The heat exchanger of any preceding clause, wherein the first fluid domain extends in the axial direction between the first end and the second end of the core.

The heat exchanger of any preceding clause, wherein the core defines a cylindrical shape.

The heat exchanger of any preceding clause, wherein the core defines a lattice structure defining the first fluid domain and the second fluid domain.

A gas turbine engine, comprising: a turbomachine comprising a compressor section, a combustion section, and a turbine section in serial flow order and at least partially defining a core gas flowpath; and a heat exchanger comprising: a core extending in an axial direction between a first end and a second end opposite the second end, the core defining a first fluid domain and a second fluid domain fluidly isolated from the first fluid domain, wherein the second fluid domain defines one or more helical fluid passageways, wherein the one or more helical fluid passageways define a pitch (P) measured in millimeters (mm), wherein the core defines a diameter (D) measured in mm extending perpendicular to the axial direction; a fluid inlet manifold fluidly coupled to the first end of the core and in fluid communication with each of the one or more helical fluid passageways of the second fluid domain, the fluid inlet manifold defining an inlet opening having an axial height (h) measured in mm extending in the axial direction; and a fluid outlet manifold fluidly coupled to the second end of the core and in fluid communication with the second fluid domain; wherein $\frac{h}{D} = \frac{P}{D} ⋅ \frac{1}{4 π} ⋅ cos \left(arctan\left(\frac{P}{πD}\right)\right)$; wherein $\frac{P}{D}$ is greater than 0 and less than 3.3; and wherein $\frac{h}{D}$ is less than $\frac{P}{D}$.

The gas turbine engine of any preceding clause, wherein the core comprises one or more helical walls fluidly isolating the first fluid domain and the second fluid domain.

The gas turbine engine of any preceding clause, wherein each of the one or more helical walls has a helical shape defining the one or more helical fluid passageways.

The gas turbine engine of any preceding clause, wherein the one or more helical fluid passageways comprises 4 to 8 helical fluid passageways.

The gas turbine engine of any preceding clause, wherein the one or more helical fluid passageways comprises four helical fluid passageways.

The gas turbine engine of any preceding clause, further comprising at least one fluid inlet in fluid communication with the fluid inlet manifold and at least one fluid outlet in fluid communication with the fluid outlet manifold.

The gas turbine engine of any preceding clause, wherein the fluid inlet manifold is a first annular manifold surrounding the first end of the core and the fluid outlet manifold is a second annular manifold surrounding the second end of the core.

The gas turbine engine of any preceding clause, wherein the second end of the core defines a first fluid inlet configured to receive a first fluid and the first end of the core defines a first fluid outlet, the first fluid inlet and the first fluid outlet in fluid communication with the first fluid domain.

The gas turbine engine of any preceding clause, wherein the first fluid domain extends in the axial direction between the first end and the second end of the core.

The gas turbine engine of any preceding clause, wherein the core defines a cylindrical shape.

The gas turbine engine of any preceding clause, wherein the core defines a lattice structure defining the first fluid domain and the second fluid domain.

The gas turbine engine of any preceding clause, wherein: the one or more helical fluid passageways define a pitch (P) measured in mm, wherein the core defines a diameter (D) measured in mm extending perpendicular to the axial direction; the fluid inlet manifold defines an inlet opening having an axial height (h) measured in millimeters (mm) extending in the axial direction; $\frac{h}{D} = \frac{P}{D} ⋅ \frac{1}{4 π} ⋅ cos \left(arctan\left(\frac{P}{πD}\right)\right)$; and $\frac{h}{D}$ is less than or equal to $\frac{P}{D}$.

The gas turbine engine of any preceding clause, wherein $\frac{P}{D}$ is greater than 0 and less than 3.3.

The gas turbine engine of any preceding clause, wherein $\frac{h}{D}$ is greater than or equal to 0.5 and less than or equal to 3.1.

The gas turbine engine of any preceding clause, wherein $\frac{h}{D}$ is greater than or equal to 0.5 and less than or equal to 1.5.

The gas turbine engine of any preceding clause, wherein the axial height (h) is greater than or equal to 10 mm and less than or equal to 900 mm.

The gas turbine engine of any preceding clause, wherein the axial height (h) is greater than or equal to 25 mm and less than or equal to 300 mm.

The gas turbine engine of any preceding clause, wherein the diameter (D) is greater than or equal to 20 mm and less than or equal to 300 mm.

The gas turbine engine of any preceding clause, wherein the diameter (D) is greater than or equal to 50 mm and less than or equal to 200 mm.

The gas turbine engine of any preceding clause, wherein the pitch (P) is greater than or equal to 10 mm and less than or equal to 900 mm.

The gas turbine engine of any preceding clause, wherein the pitch (P) is greater than or equal to 50 mm and less than or equal to 600 mm.

The gas turbine engine of any preceding clause, wherein the one or more helical fluid passageways define a helix angle (α), wherein $h = \frac{P}{4 π} ⋅ cos α$; and wherein $α = arctan \left(\frac{P}{πD}\right)$.

A heat exchanger for a gas turbine engine, the heat exchanger comprising:
a core extending in an axial direction between a first end and a second end opposite the second end, the core defining a first fluid domain and a second fluid domain fluidly isolated from the first fluid domain, wherein the second fluid domain defines one or more helical fluid passageways, wherein the one or more helical fluid passageways define a pitch (P) measured in millimeters (mm), wherein the core defines a diameter (D) measured in mm extending perpendicular to the axial direction;
a fluid inlet manifold fluidly coupled to the first end of the core and in fluid communication with each of the one or more helical fluid passageways of the second fluid domain, the fluid inlet manifold defining an inlet opening having an axial height (h) measured in mm extending in the axial direction; and
a fluid outlet manifold fluidly coupled to the second end of the core and in fluid communication with the second fluid domain;
wherein $\frac{h}{D} = \frac{P}{D} ⋅ \frac{1}{4 π} ⋅ cos \left(arctan\left(\frac{P}{πD}\right)\right) ;$ and
wherein $\frac{h}{D}$ is less than $\frac{P}{D}$.

The heat exchanger of any preceding clause, wherein $\frac{P}{D}$ is greater than 0 and less than 3.3.

The heat exchanger of any preceding clause, wherein $\frac{h}{D}$ is greater than 0.5 and less than 3.1.

The heat exchanger of any preceding clause, wherein $\frac{h}{D}$ is greater than 0.5 and less than 1.5.

The heat exchanger of any preceding clause, wherein the axial height (h) is greater than or equal to 10 mm and less than or equal to 900 mm.

The heat exchanger of any preceding clause, wherein the axial height (h) is greater than or equal to 25 mm and less than or equal to 300 mm.

The heat exchanger of any preceding clause, wherein the diameter (D) is greater than or equal to 20 mm and less than or equal to 300 mm.

The heat exchanger of any preceding clause, wherein the diameter (D) is greater than or equal to 50 mm and less than or equal to 200 mm.

The heat exchanger of any preceding clause, wherein the pitch (P) is greater than or equal to 10 mm and less than or equal to 900 mm.

The heat exchanger of any preceding clause, wherein the pitch (P) is greater than or equal to 50 mm and less than or equal to 600 mm.

The heat exchanger of any preceding clause, wherein the one or more helical fluid passageways define a helix angle (α), wherein $h = \frac{P}{4 π} ⋅ cos α$; and wherein $α = arctan \left(\frac{P}{πD}\right) .$

The heat exchanger of any preceding clause, wherein the core comprises one or more helical walls fluidly isolating the first fluid domain and the second fluid domain.

The heat exchanger of any preceding clause, wherein each of the one or more helical walls has a helical shape defining the one or more helical fluid passageways.

The heat exchanger of any preceding clause, wherein the one or more helical fluid passageways comprises 4 to 8 helical fluid passageways.

The heat exchanger of any preceding clause, further comprising at least one fluid inlet in fluid communication with the fluid inlet manifold and at least one fluid outlet in fluid communication with the fluid outlet manifold.

The heat exchanger of any preceding clause, wherein the fluid inlet manifold is a first annular manifold surrounding the first end of the core and the fluid outlet manifold is a second annular manifold surrounding the second end of the core.

The heat exchanger of any preceding clause, wherein the second end of the core defines a first fluid inlet configured to receive a first fluid and the first end of the core defines a first fluid outlet, the first fluid inlet and the first fluid outlet in fluid communication with the first fluid domain.

The heat exchanger of any preceding clause, wherein the first fluid domain extends in the axial direction between the first end and the second end of the core.

The heat exchanger of any preceding clause, wherein the core defines a cylindrical shape.

A gas turbine engine, comprising:
a turbomachine comprising a compressor section, a combustion section, and a turbine section in serial flow order and at least partially defining a core gas flowpath; and
a heat exchanger comprising:
   a core extending in an axial direction between a first end and a second end opposite the second end, the core defining a first fluid domain and a second fluid domain fluidly isolated from the first fluid domain, wherein the second fluid domain defines one or more helical fluid passageways, wherein the one or more helical fluid passageways define a pitch (P) measured in millimeters (mm), wherein the core defines a diameter (D) measured in mm extending perpendicular to the axial direction;
   a fluid inlet manifold fluidly coupled to the first end of the core and in fluid communication with each of the one or more helical fluid passageways of the second fluid domain, the fluid inlet manifold defining an inlet opening having an axial height (h) measured in mm extending in the axial direction; and
   a fluid outlet manifold fluidly coupled to the second end of the core and in fluid communication with the second fluid domain;
   wherein $\frac{h}{D} = \frac{P}{D} ⋅ \frac{1}{4 π} ⋅ cos \left(arctan\left(\frac{P}{πD}\right)\right) ;$ and
   wherein $\frac{h}{D}$ is less than $\frac{P}{D}$.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A heat exchanger (200) for a gas turbine engine (10), comprising:
a core (205) extending in an axial direction between a first end (201) and a second end (202) opposite the second end (202), the core (205) defining a first fluid domain (300) and a second fluid domain (305) fluidly isolated from the first fluid domain (300), wherein the second fluid domain (305) defines one or more helical fluid passageways (315), wherein the one or more helical fluid passageways (315) define a pitch (P) measured in mm, wherein the core (205) defines a diameter (D) measured in mm extending perpendicular to the axial direction;
a fluid inlet manifold (215) fluidly coupled to the first end (201) of the core (205) and in fluid communication with each of the one or more helical fluid passageways (315) of the second fluid domain (305), the fluid inlet manifold (215) defines an inlet opening (415) having an axial height (h) measured in millimeters (mm) extending in the axial direction; and
a fluid outlet manifold (425) fluidly coupled to the second end (202) of the core (205) and in fluid communication with the second fluid domain (305);
wherein $\frac{h}{D} = \frac{P}{D} ⋅ \frac{1}{4 π} ⋅ cos \left({tan}^{- 1}\left(\frac{P}{πD}\right)\right) ;$ and
wherein $\frac{h}{D}$ is less than or equal to $\frac{P}{D}$.

2. The heat exchanger (200) of claim 1, wherein:
$\frac{P}{D}$ is greater than 0 and less than or equal to 3.3; and
$\frac{h}{D}$ is greater than or equal to 0.5 and less than or equal to 3.1.

3. The heat exchanger (200) of any preceding claim, wherein the axial height (h) is greater than or equal to 10 mm and less than or equal to 900 mm.

4. The heat exchanger (200) of any preceding claim, wherein the diameter (D) is greater than or equal to 20 mm and less than or equal to 300 mm.

5. The heat exchanger (200) of any preceding claim, wherein the pitch (P) is greater than or equal to 10 mm and less than or equal to 900 mm.

6. The heat exchanger (200) of any preceding claim, wherein the one or more helical fluid passageways (315) define a helix angle (α), wherein $h = \frac{P}{4 π} ⋅ cos α$; and wherein $α = {tan}^{- 1} \left(\frac{P}{πD}\right) .$

7. The heat exchanger (200) of any preceding claim, wherein the core (205) comprises one or more helical walls (320) fluidly isolating the first fluid domain (300) and the second fluid domain (305).

8. The heat exchanger (200) of claim 8, wherein each of the one or more helical walls (320) has a helical shape defining the one or more helical fluid passageways (315).

9. The heat exchanger (200) of any preceding claim, wherein the one or more helical fluid passageways (315) comprises 4 to 8 helical fluid passageways (315).

10. The heat exchanger (200) of any preceding claim, further comprising at least one fluid inlet in fluid communication with the fluid inlet manifold (215) and at least one fluid outlet in fluid communication with the fluid outlet manifold (425).

11. The heat exchanger (200) of any preceding claim, wherein the fluid inlet manifold (215) is an annular manifold surrounding the first end (201) of the core (205) and the fluid outlet manifold (425) is an annular manifold surrounding the second end (202) of the core (205).

12. The heat exchanger (200) of any preceding claim, wherein the second end (202) of the core (205) defines a first fluid inlet (245) configured to receive a first fluid (235) and the first end (201) of the core (205) defines a first fluid outlet (250), the first fluid inlet (245) and the first fluid outlet (250) in fluid communication with the first fluid domain (300).

13. The heat exchanger (200) of any preceding claim, wherein the first fluid domain (300) extends in the axial direction between the first end (201) and the second end (202) of the core (205).

14. The heat exchanger (200) of any preceding claim, wherein the core (205) comprises a cylindrical shape.

15. The heat exchanger of any preceding claim, wherein the core (205) comprises a lattice structure defining the first fluid domain (300) and the second fluid domain (305).
